(19)

Europäisches
Patentamt
European
Patent Office
Office européen
des brevets

(11) **EP 1 950 228 A1**

(12) **EUROPEAN PATENT APPLICATION**

(43) Date of publication:
**30.07.2008 Bulletin 2008/31**

(51) Int Cl.:
*C08F 14/06* [(2006.01)]    *C08B 11/193* [(2006.01)]
*C08L 1/28* [(2006.01)]

(21) Application number: **08250270.9**

(22) Date of filing: **22.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **23.01.2007 JP 2007012399**

(71) Applicant: **Shin-Etsu Chemical Co., Ltd.**
**Tokyo (JP)**

(72) Inventors:
• **Ooura, Makoto**
 **Kamisu-shi, Ibaraki-ken (JP)**

• **Amano, Tadashi**
 **Kamisu-shi, Ibaraki-ken (JP)**
• **Shigemitsu, Minoru**
 **Kamisu-shi, Ibaraki-ken (JP)**
• **Niinobe, Shingo**
 **Kamisu-shi, Ibaraki-ken (JP)**

(74) Representative: **Hallybone, Huw George et al**
 **Carpmaels & Ransford**
 **43-45 Bloomsbury Square**
 **London WC1A 2RA (GB)**

(54) **Dispersion stabilizer for suspension polymerization and method of producing vinyl chloride-based polymer using same**

(57)    Provided is a dispersion stabilizer for suspension polymerization that contains a hydroxypropylmethylcellulose with a degree of methoxy group substitution of 27 to 30% by mass and a degree of hydroxypropoxy group substitution of 5 to 12% by mass, in which the viscosity at 20°C of a 2% by mass aqueous solution of the hydroxypropylmethylcellulose is within a range from 5 to 1,600 mPa·s, and in 2 ml of a 0.2% by mass solution of the hydroxypropylmethylcellulose, the number of undissolved fibers with a particle size within a range from 8 to 200 $\mu$m, as measured by a Coulter counter method, is not more than 1,000, and the number of undissolved fibers with a particle size of 50 $\mu$m or greater measured using the same method is not more than 20. By employing a method of producing a vinyl chloride-based polymer that uses this dispersion stabilizer, a vinyl chloride-based polymer with extremely low levels of fish eyes and defects derived from foreign objects can be produced.

EP 1 950 228 A1

**Description**

BACKGROUND OF THE INVENTION

1. Field of the Invention

The present invention relates to a dispersion stabilizer for suspension polymerization, and a method of producing a vinyl chloride-based polymer using the dispersion stabilizer. The invention relates particularly to a dispersion stabilizer for suspension polymerization and a method of producing a vinyl chloride-based polymer using the dispersion stabilizer that enable the production of a vinyl chloride-based polymer with extremely low levels of fish eyes and defects caused by foreign objects.

2. Description of the Prior Art

Vinyl chloride-based polymers are very useful resins with excellent physical properties, and hard through to soft vinyl chloride-based polymers are used in a wide range of applications. These resins may contain defects caused by foreign objects, and other non-uniform sections derived from unmelted portions of the polymer, or so-called fish eye defects. Reducing these defects as much as possible remains a significant issue. Particularly in applications that use thin films or stretched films, these fish eyes and defects caused by foreign objects can act as the staring points for film tearing and stripelike defects, and represent a considerable problem in terms of productivity and yield.
Nowadays, it is well known that polymers with favorable plasticizer absorption properties exhibit reduced levels of fish eyes, and a multitude of methods have been proposed for producing vinyl chloride-based polymers with excellent plasticizer absorption. For example, the patent reference 1 discloses a method of producing a porous vinyl chloride-based polymer in which a suspension polymerization of vinyl chloride is conducted in the presence of a partially saponified polyvinyl alcohol with a saponification degree of 37 to 70 mol% and a polymerization degree within a range from 160 to 500.
Furthermore, the patent reference 2 discloses a method of producing a vinyl chloride-based polymer with excellent plasticizer absorption by using: (A) a partially saponified polyvinyl alcohol with an average polymerization degree of 1,500 to 2,700 and a saponification degree of 75 to 85 mol%, and (B) a hydroxypropylmethylcellulose with a degree of methoxy substitution of 26 to 30% by weight, a degree of hydroxypropoxy substitution of 4 to 15% by weight, and a viscosity at 20°C of a 2% by weight aqueous solution thereof of 5 to 4,000 mPa·s; and adding (C) a partially saponified polyvinyl alcohol with an average polymerization degree of 150 to 600 and a saponification degree of 20 to 55 mol% at a point where the polymerization conversion rate is within a range from 5 to 50%.
[Patent Reference 1] GB 1 524 492
[Patent Reference 2] USP 5,204,421

SUMMARY OF THE INVENTION

By using conventional methods such as those described above, the level of fish eyes derived from unmelted portions of the polymer can be reduced, but the level of defects caused by foreign objects can not be reduced. Potential sources of foreign objects exist at all stages of the production process, and in many cases, the quantity of these foreign objects can be reduced by appropriate installation of strainers, alteration of the production conditions, or conducting cleaning operations. However, in thin-film and stretched film applications such as those mentioned above, the demands for reductions in the level of foreign objects are considerable, and the above measures are insufficient.
An object of the present invention is to provide a dispersion stabilizer for suspension polymerization that enables the production of a vinyl chloride-based polymer with extremely low levels of fish eyes and defects derived from foreign objects, and also to provide a method of producing a vinyl chloride-based polymer that uses this dispersion stabilizer.
As a result of intensive investigation, the inventors of the present invention discovered that a major cause of the foreign objects that produce the above problems is undissolved fibers contained within the aqueous solution of a cellulose derivative that is typically used in the production of vinyl chloride-based polymers. Moreover, the inventors also discovered that by using a suspension polymerization dispersion stabilizer in which the substituent groups within the cellulose derivative have been restricted within a specific range, the above problems could be resolved, and they were therefore able to complete the present invention.
In other words, the present invention provides a dispersion stabilizer for suspension polymerization, comprising a hydroxypropylmethylcellulose with a degree of methoxy group substitution of 27 to 30% by mass and a degree of hydroxypropoxy group substitution of 5 to 12% by mass, wherein
the viscosity at 20°C of a 2% by mass aqueous solution of the hydroxypropylmethylcellulose is within a range from 5 to 1,600 mPa·s, and
in 2 ml of a 0.2% by mass solution of the hydroxypropylmethylcellulose, the number of undissolved fibers with a particle size within a range from 8 to 200 $\mu$m, as measured by a Coulter counter method, is not more than 1,000, and the number of undissolved fibers with a particle size of 50 $\mu$m or greater measured using the same method is not more than 20.

A second aspect of the present invention provides a method of producing a vinyl chloride-based polymer, comprising a step of conducting a suspension polymerization, within an aqueous medium and in the presence of the dispersion stabilizer described above, of either vinyl chloride or a monomer mixture of vinyl chloride and another copolymerizable monomer, wherein

at the time of polymerization initiation, the quantity of the dispersion stabilizer is within a range from 0.01 to 0.07 parts by mass per 100 parts by mass of the vinyl chloride or the monomer mixture.

A third aspect of the present invention provides a vinyl chloride-based polymer obtained using the above dispersion stabilizer, wherein the number of foreign objects caused by fibers, as measured in a foreign object measurement test, is not more than 10.

By using the dispersion stabilizer for suspension polymerization according to the present invention, the numbers of fish eyes and foreign objects within the product vinyl chloride-based polymer are reduced, and the yield and productivity during processing and molding can be increased dramatically.

## DETAILED DESCRIPTION OF THE PREFERRED EMBODIMENTS

As follows is a more detailed description of the present invention.

- Dispersion Stabilizer -

As described above, the dispersion stabilizer for suspension polymerization according to the present invention is a dispersion stabilizer comprising a hydroxypropylmethylcellulose with a degree of methoxy group substitution of 27 to 30% by mass and a degree of hydroxypropoxy group substitution of 5 to 12% by mass, wherein

the viscosity at 20°C of a 2% by mass aqueous solution of the hydroxypropylmethylcellulose is within a range from 5 to 1,600 mPa·s, and

in 2 ml of a 0.2% by mass solution of the hydroxypropylmethylcellulose, the number of undissolved fibers with a particle size within a range from 8 to 200 $\mu$m, as measured by a Coulter counter method, is not more than 1,000, and the number of undissolved fibers with a particle size of 50 $\mu$m or greater measured using the same method is not more than 20.

If the degree of methoxy group substitution within the hydroxypropylmethylcellulose is less than 27% by mass, and/or the degree of hydroxypropoxy group substitution within the hydroxypropylmethylcellulose is less than 5% by mass, then the plasticizer absorption of the product polymer may deteriorate. In contrast, if the degree of methoxy group substitution is greater than 30% by mass, and/or the degree of hydroxypropoxy group substitution is greater than 12% by mass, then the particle size distribution of the product polymer tends to become undesirably broad.

The viscosity at 20°C of a 2% by mass aqueous solution of the hydroxypropylmethylcellulose is typically within a range from 5 to 1,600 mPa·s, and is preferably within a range from 10 to 1,000 mPa·s, and even more preferably from 20 to 500 mPa·s. If this viscosity is too low, then the polymerization stability of the suspension polymerization using the resulting dispersion stabilizer may deteriorate, causing a broadening of the particle size distribution for the product polymer. In contrast, if the viscosity is too high, then the fluidity of the resulting dispersion stabilizer deteriorates, and controlling the quantity added of the dispersion stabilizer can become difficult. In order to use this type of viscous dispersion stabilizer, the viscosity must first be reduced by lowering the solution concentration, but because the number of operations required to achieve dissolution tends to increase, and because a larger volume dissolution tank becomes necessary, the operability tends to deteriorate significantly.

In 2 ml of a 0.2% by mass solution of the hydroxypropylmethylcellulose, if the number of undissolved fibers with a particle size within a range from 8 to 200 $\mu$m, as measured by a Coulter counter method, exceeds 1,000, then the number of fish eyes caused by these undissolved fibers tends to increase, causing a deterioration in the yield and productivity during processing and molding. Furthermore, if within 2 ml of the solution, the number of undissolved fibers with a particle size of 50 $\mu$m or greater measured using the same method exceeds 20, then there is a danger that the deterioration described above may become particularly marked.

The number of these undissolved fibers can be measured using the following method. First, the hydroxypropylmethylcellulose is dissolved, inside a thermostatic chamber at 20°C, in a sufficient quantity of a Coulter counter electrolyte solution (ISOTON II) to produce a solution with a concentration of 0.2% by mass. The undissolved fibers that exist within 2 ml of the resulting solution are then measured relative to particle size using a Coulter counter fitted with an aperture tube with a diameter of 400 $\mu$m. In this manner, the number of undissolved fibers within any specified particle size range can be measured.

Moreover, the light transmittance of a 2% by mass aqueous solution of the above hydroxypropylmethylcellulose, measured at 30°C using a glass cell with an optical path length of 20 mm, is preferably not less than 95%. If this light transmittance is less than 95%, then the number of fish eyes caused by undissolved fibers within the hydroxypropylmethylcellulose tends to increase, causing a deterioration in the yield and productivity during processing and molding.

The light transmittance can be measured using the following method. First, the hydroxypropylmethylcellulose is dissolved, inside a thermostatic chamber at 30°C, in a sufficient quantity of water to produce an aqueous solution of the hydroxypropylmethylcellulose with a concentration of 2% by mass. This aqueous solution is used to fill a glass cell with an optical path length of 20 mm, and the light transmittance at 30°C is then measured using a spectrophotometer under direct irradiation (with no filter) with a W-lamp, using water as a reference liquid. The light transmittance measured in this manner is used as the light transmittance value within the present invention.

The dispersion stabilizer for suspension polymerization according to the present invention may comprise either a single hydroxypropylmethylcellulose as described above, or a combination of two or more of these hydroxypropylmethylcellulose compounds. Furthermore, the dispersion stabilizer may also be used in combination with other conventional dispersion stabilizers that are used in the production of vinyl chloride-based polymers. Either one, or two or more of these conventional dispersion stabilizers may be used, and examples include partially saponified polyvinyl alcohol, acrylic acid polymers, gelatin, sorbitan monolaurate, sorbitan trioleate, glycerol tristearate, ethylene oxide-propylene oxide block copolymers, polyoxyethylene sorbitan monolaurate, polyoxyethylene glycerol oleate, and sodium laurate.

(Production Method)

Cellulose ethers are typically produced by adding an alkali to a raw material pulp to generate an alkali cellulose, and subsequently adding an etherification agent. However, non-uniformity of the depolymerization during production of the alkali cellulose, and non-uniformity of the solid-liquid reaction during the ether substitution reaction tend to generate large quantities of undissolved fibers.

In order to restrict the quantity of these undissolved fibers to the ranges described above, the hydroxypropylmethylcellulose that is used as the suspension polymerization dispersion stabilizer of the present invention can be prepared by employing conditions that enable a uniform and satisfactory reaction to be conducted using a conventional cellulose derivative production method. Examples of the production method include a method in which, during production of the alkali cellulose, the powdered pulp and the aqueous alkali solution are mixed together thoroughly using a biaxial kneader, a method in which the quantity of oxygen within the reaction vessel prior to addition of the aqueous alkali solution is reduced to not more than 1 g per 1 kg of the cellulose, a method in which the aqueous alkali solution is added to the powdered pulp in the presence of a large quantity of an organic solvent, and a method in which the powdered pulp and the aqueous alkali solution are mixed together thoroughly at a temperature of 40 to 70°C, either within an inert solvent or within a mixed solvent comprising an inert solvent and chloromethyl.

(Method of Use)

When the vinyl chloride or the monomer mixture of vinyl chloride and another copolymerizable monomer (namely, another monomer capable of undergoing copolymerization with vinyl chloride) (hereafter referred to as the "added monomer") is subjected to suspension polymerization within an aqueous medium using the dispersion stabilizer for suspension polymerization according to the present invention, the quantity used of the dispersion stabilizer at the time of polymerization initiation is within a range from 0.01 to 0.07 parts by mass, and preferably from 0.01 to 0.05 parts by mass, per 100 parts by mass of the added monomer.

- Vinyl Chloride-based Polymer -

A vinyl chloride-based polymer obtained using the suspension polymerization dispersion stabilizer of the present invention preferably contains not more than 10 foreign objects caused by fibers, as measured in a foreign object measurement test. This type of vinyl chloride-based polymer can be produced, for example, using a production method for a vinyl chloride-based polymer comprising the step of conducting a suspension polymerization, within an aqueous medium and in the presence of the dispersion stabilizer of the present invention, of either vinyl chloride or a monomer mixture of vinyl chloride and another copolymerizable monomer, wherein at the time of polymerization initiation, the quantity of the dispersion stabilizer is within a range from 0.01 to 0.07 parts by mass, and preferably from 0.01 to 0.05 parts by mass, per 100 parts by mass of the vinyl chloride or monomer mixture. Here, the expression "foreign objects caused by fibers" refers to undissolved fibers derived from the above hydroxypropylmethylcellulose.

The foreign object measurement test can be conducted in the following manner. Namely, 50 g of a compound obtained by mixing 100 parts by mass of the sample polymer, 2 parts by mass of a tin-based stabilizer, and 20 parts by mass of dioctyl phthalate (DOP) are placed in a mold with dimensions of 150 mm x 150 mm x 3 mm, and following preheating at 175°C for 3 minutes, press molding is conducted by performing two repetitions of a pressure application-pressure release (normal pressure) operation (wherein the pressure during the first pressure application is 1.0 MPa, and the pressure during the second pressure application is 2.0 MPa), and then applying a pressure of 3.5 MPa for 2 minutes, before conducting cooling. Foreign objects within the thus obtained plate are inspected visually under a magnifying glass (10× magnification), and the number of foreign objects caused by fibers is measured. If this number of foreign objects exceeds 10, then there is danger that the yield and productivity during processing and molding of the vinyl chloride-based polymer of the present invention may deteriorate significantly.

- Other Polymerization Conditions -

With the exceptions of using a specific dispersion stabilizer as described above, and restricting the quantity of that dispersion stabilizer, the method of producing a vinyl chloride-based polymer according to the present invention can be conducted under the same conditions as those employed within conventional vinyl chloride-based polymer production methods.

(Monomer)

The monomer raw material used in the present invention is either vinyl chloride, or a monomer mixture of vinyl chloride and another copolymerizable monomer. An example of the monomer mixture is a mixture comprising vinyl chloride as the primary constituent, namely a mixture comprising at least 50% by mass of vinyl chloride, and not more than 50% by mass of another copolymerizable monomer. Examples of this copolymerizable monomer include vinyl esters such as vinyl acetate and vinyl propionate; acrylate esters such as methyl acrylate and ethyl acrylate; methacrylate esters such as methyl methacrylate and ethyl methacrylate; olefins such as ethylene and propylene; as well as other monomers such as maleic anhydride, acrylonitrile, styrene and vinylidene chloride. These monomers may be used either alone, or in combinations of two or more different monomers.

(Polymerization Initiator)

There are no particular restrictions on the polymerization initiator used in the method of the present invention, and the types of initiators used in conventional vinyl chloride-based polymer production are suitable. Examples of these polymerization initiators include peroxycarbonate compounds such as diisopropyl peroxydicarbonate, di-2-ethylhexyl peroxydicarbonate, diethoxyethyl peroxydicarbonate, and di-sec-butyl peroxydicarbonate; peroxy ester compounds such as t-butyl peroxypivalate, t-hexyl peroxypivalate, t-butyl peroxyneodecanoate, $\alpha$-cumyl peroxyneodecanoate, t-butyl peroxyneoheptanoate, and t-amyl peroxyneodecanoate; peroxides such as diisobutyryl peroxide, acetylcyclohexylsulfonyl peroxide, 2,4,4-trimethylpentyl-2-peroxyphenoxy acetate and 3,5,5-trimethylhexanoyl peroxide; azo compounds such as azobis-2,4-dimethylvaleronitrile and azobis(4-methoxy-2,4-dimethylvaleronitrile); persulfates such as potassium persulfate and ammonium persulfate; and hydrogen peroxide. These polymerization initiators may be used either alone, or in combinations of two or more different initiators. The quantity used of the polymerization initiator is typically within a range from 0.01 to 1 part by mass per 100 parts by mass of the added monomer.

There are no particular restrictions on the antioxidants used in the present invention, and the types of antioxidants typically used in conventional vinyl chloride-based polymer production are suitable. Examples of these antioxidants include phenol compounds such as 2,2-di(4'-hydroxyphenyl)propane, hydroquinone, p-methoxyphenol, t-butylhydroxyanisole, n-octadecyl-3-(3,5-di-t-butyl-4-hydroxyphenyl)propionate, 2,5-di-t-butylhydroquinone, 4,4'-butylidene-bis(3-methyl-6-t-butylphenol), 3,5-di-t-butyl-4-hydroxytoluene, 2,2'-methylene-bis(4-ethyl-6-t-butylphenol), triethylene glycolbis[3-(3-t-butyl-5-methyl-4-hydroxyphenyl)propionate], pentaerythritol-tetrakis[3-(3,5-di-t-butyl-4-hydroxyphenyl)propionate], 2,6-di-t-butyl-4-sec-butylphenol, 2,6-di-t-butyl-4-methylphenol, t-butylcatechol, 4,4'-thiobis(6-t-butyl-m-cresol), tocopherol, and nordihydroguaiaretic acid; semicarbazide derivatives such as semicarbazide, 1-acetylsemicarbazide, 1-chloroacetylsemicarbazide, 1-dichloroacetylsemicarbazide, 1-benzoylsemicarbazide and semicarbazone; thiocarbazide derivatives such as carbohydrazide, thiosemicarbazide and thiosemicarbazone; amine compounds such as phenylnaphthylamine, N,N'-diphenyl-p-phenylenediamine, and 4,4'-bis(dimethylbenzyl)diphenylamine; nitro and nitroso compounds such as nitroanisole, N-nitrosodiphenylamine, nitroaniline, and the aluminum salt of N-nitrosophenylhydroxylamine; phosphorus compounds such as triphenyl phosphite, diphenylisodecyl phosphite, phenyldiisodecyl phosphite, 4,4'-butylidene-bis(3-methyl-6-t-butylphenyl-di-tridecyl) phosphite, cyclic neopentanetetraylbis(octadecyl phosphite), tris (nonylphenyl) phosphite, and tris(dinonylphenyl) phosphite; unsaturated hydrocarbon compounds such as styrene, 1,3-hexadiene and methylstyrene; and sulfur compounds such as dilauryl thiodipropionate, dimyristyl thiodipropionate, distearyl thiodipropionate, dodecylmercaptan, and 1,3-diphenyl-2-thiourea. These antioxidants may be used either alone, or in combinations of two or more different compounds.

Of the above antioxidants, from the viewpoints of achieving favorable anti-initial discoloration of the product polymer, and limiting scale adhesion to the polymerization vessel, 3,5-di-t-butyl-4-hydroxytoluene, triethylene glycol-bis [3-(3-t-butyl-5-methyl4-hydroxyphenyl)propionate], t-butylhydroxyanisole, t-butylhydroquinone, 2,6-di-t-butyl-4-sec-butylphenol, and n-octadecyl-3-(3,5-di-t-butyl-4hydroxyphenyl)propionate are preferred.

There are no particular restrictions on the point at which the antioxidant is added, and addition may be conducted prior to polymerization initiation with the aim of reducing fish eyes in the product polymer, during the polymerization reaction with the aim of controlling the progress of unwanted reactions and controlling the polymerization rate, or following completion of the polymerization with the aim of controlling the quality of plasticizer absorption provided by the product polymer, with the addition timing selected in accordance with the desired effect. There are no particular restrictions on the method used to add the antioxidant, and typically used methods including dissolving the antioxidant in an organic solvent such as methanol, ethanol or acetone prior to addition, adding the antioxidant as a water-based emulsion, or adding the antioxidant in a heated molten state can all be used effectively.

The quantity added of the antioxidant is preferably within a range from 0.0001 to 0.1 parts by mass per 100 parts by mass of the added monomer.

(Other)

Other conditions associated with the polymerization, such as the method of supplying the aqueous medium, the vinyl chloride or the monomer mixture comprising vinyl chloride, the dispersion assistant, and the polymerization initiator and the like to the polymerization vessel, as well as the relative proportions added of each component and the polymerization temperature and the like, may be similar to conventional methods. Furthermore, if required, other components typically used in the production of vinyl chloride-based polymers, such as polymerization degree regulators, chain transfer agents, gelation improvers, and antistatic agents, may also be used.

EXAMPLES

As follows is a more detailed description of the present invention using a series of examples, although the present invention is in no way limited by the examples presented.

[Example 1]

A stainless steel polymerization vessel with an internal capacity of 2 m$^3$ was charged with 980 kg of deionized water, 162.5 g of a hydroxypropylmethylcellulose with the properties shown in Table 1, 162.5 g of a partially saponified polyvinyl alcohol with a saponification degree of 80.5 mol% and an average polymerization degree of 2,500, and 65 g of a partially saponified polyvinyl alcohol with a saponification degree of 48 mol% and a polymerization degree of 230. The inside of the polymerization vessel was then degassed until the internal pressure reached 8 kPa (absolute pressure), and 650 kg of vinyl chloride monomer was added. With the mixture undergoing constant stirring, 585 g of t-butyl peroxyneodecanoate was added as a polymerization initiator, and at the same time, a temperature raising process was started by passing hot water through the vessel jacket. Once the temperature inside the polymerization vessel reached 52.0°C, the polymerization was allowed to proceed with the temperature maintained at that level.

When the pressure inside the polymerization vessel had fallen to 0.62 MPa (gauge pressure), 186 g of a 35% by mass aqueous dispersion of triethylene glycol-bis[3-(3-t-butyl-5-methyl-4-hydroxyphenyl)propionate] was added to the polymerization vessel, and the unreacted monomer was then recovered.

The apparent specific gravity, average particle size, plasticizer absorption quantity, plasticizer absorption, number of fish eyes, and number of foreign objects for the thus obtained polymer were measured using the methods described below. The results are shown in Table 2.

- Apparent Specific Gravity -

The apparent specific gravity of the vinyl chloride-based polymer was measured in accordance with JIS K7365.

- Average Particle Size -

Using test sieves as prescribed in JIS Z8801, sieves with nominal sizes of 300 $\mu$m, 250 $\mu$m, 180 $\mu$m, 150 $\mu$m, 106 $\mu$m, and 75 $\mu$m were fitted to a Ro-Tap sieve shaker. 100 g of the vinyl chloride-based polymer was placed gently on the uppermost stage, and following shaking for 10 minutes, the mass of sample remaining on each of the sieves was measured, and the percentages (A to F) listed below were determined relative to the total mass (100 g). The average particle size was then determined by inserting the sieve retention rate and sieve pass rate for each sieve into the formula shown below.

A: sieve retention rate (%) for sieve of nominal size 250 $\mu$m
B: sieve retention rate (%) for sieve of nominal size 180 $\mu$m

C: sieve retention rate (%) for sieve of nominal size 150 $\mu$m
D: sieve retention rate (%) for sieve of nominal size 106 $\mu$m
E: sieve retention rate (%) for sieve of nominal size 75 $\mu$m
F: sieve pass rate (%) for sieve of nominal size 75 $\mu$m

$$\text{Average particle size } (\mu m) = \{(A\times300) + (B\times215) + (C\times165) + (D\times128) + (E\times90) + (F\times60)\} \times 1/100$$

- Plasticizer Absorption Quantity -

The plasticizer absorption quantity for the vinyl chloride-based polymer was measured in accordance with JIS K7386.

- Plasticizer Absorption -

A 400 g sample of the polymer was placed in a Brabender plastograph fitted with a stirrer and with the jacket temperature set to 80°C, the polymer was stirred for 4 minutes, and when the temperature of the polymer reached 80°C, 200 g of DOP was added, and the time taken from the point of addition until dry-up (where the rotational torque started to fall) was measured.

- Fish Eyes -

25 g of a compound obtained by mixing 100 parts by mass of the sample polymer, 1 part by mass of tribasic lead sulfate, 1.5 parts by mass of lead stearate, 0.2 parts by mass of titanium dioxide, 0.1 parts by mass of carbon black, and 50 parts by mass of DOP was kneaded for 5 minutes at 145°C using a roll mill, and a sheet of thickness 0.2 mm was then formed from the mixture. The number of transparent spots per 100 $cm^2$ of the sheet was counted.

- Foreign Object Measurement Test -

50 g of a compound obtained by mixing 100 parts by mass of the sample polymer, 2 parts by mass of a tin-based stabilizer, and 20 parts by mass of DOP was placed in a mold with dimensions of 150 mm x 150 mm x 3 mm, and following preheating at 175°C for 3 minutes, press molding was conducted by performing two repetitions of a pressure application-pressure release (normal pressure) operation (wherein the pressure during the first pressure application was 1.0 MPa, and the pressure during the second pressure application was 2.0 MPa), and then applying a pressure of 3.5 MPa for 2 minutes, before conducting cooling. Foreign objects within the thus obtained plate were inspected visually under a magnifying glass (lOx magnification), and the number of foreign objects caused by fibers was measured.

[Example 2, Comparative Examples 1 to 3]

With the exception of using a hydroxypropylmethylcellulose with the properties shown in Table 1 for each example, a polymer was prepared and then measured in the same manner as the example 1. The results are shown in Table 2.

[Table 1]

|  | Example 1 | Example 2 | Example 3 | Comparative example 1 | Comparative example 2 | Comparative example 3 |
|---|---|---|---|---|---|---|
| Degree of methoxy group substitution (% by mass) | 29.0 | 28.8 | 29.3 | 28.4 | 25.9 | 28.7 |

(continued)

| | Example 1 | Example 2 | Example 3 | Comparative example 1 | Comparative example 2 | Comparative example 3 |
|---|---|---|---|---|---|---|
| Degree of hydroxypropoxy group substitution (% by mass) | 8.8 | 6.1 | 9.1 | 8.9 | 6.0 | 8.7 |
| Viscosity of 2% by mass aqueous solution (mPa·s) | 48.7 | 52.7 | 49.2 | 48.6 | 46.4 | 49.2 |
| Number of undissolved fibers (Number fibers / 2 ml of 0.2% by mass solution) Particle size 50 $\mu$m or greater | 0 | 5 | 10 | 50 | 26 | 25 |
| Particle size 8 to 200 $\mu$m | 277 | 649 | 310 | 1200 | 3211 | 1101 |
| Light transmittance of 2% by mass aqueous solution (%) | 98.5 | 98.0 | 97.4 | 90.6 | 84.5 | 92.2 |

In the above table, the "viscosity" values refer to values measured at 20°C, the "number of undissolved fibers" refer to values measured using a Coulter counter method, and the "light transmittance" values refer to values measured at 30°C, using a glass cell with an optical path length of 20 mm, under direct irradiation (with no filter) with a W-lamp.

[Table 2]

| | Example 1 | Example 2 | Example 3 | Comparative example 1 | Comparative example 2 | Comparative example 3 |
|---|---|---|---|---|---|---|
| Apparent specific gravity (g/ml) | 0.520 | 0.525 | 0.519 | 0.514 | 0.523 | 0.517 |
| Average particle size ($\mu$m) | 134 | 147 | 136 | 138 | 172 | 135 |
| Plasticizer absorption quantity (%) | 26.5 | 24.8 | 26.7 | 26.6 | 22.8 | 26.4 |
| Plasticizer absorption (minutes) | 18.0 | 18.7 | 17.8 | 18.3 | 19.8 | 18.4 |
| Number of fish eyes (count) | 0 | 2 | 0 | 12 | 178 | 8 |
| Number of foreign objects (count) | 0 | 1 | 4 | 19 | 18 | 12 |

**Claims**

1. A dispersion stabilizer for suspension polymerization, comprising a hydroxypropylmethylcellulose with a degree of methoxy group substitution of 27 to 30% by mass and a degree of hydroxypropoxy group substitution of 5 to 12% by mass, wherein
a viscosity at 20°C of a 2% by mass aqueous solution of the hydroxypropylmethylcellulose is within a range from 5 to 1,600 mPa·s, and
in 2 ml of a 0.2% by mass solution of the hydroxypropylmethylcellulose, a number of undissolved fibers with a particle size within a range from 8 to 200 μm, as measured by a Coulter counter method, is not more than 1,000, and a number of undissolved fibers with a particle size of 50 μm or greater measured using the same method is not more than 20.

2. The dispersion stabilizer according to claim 1, wherein a light transmittance of a 2% by mass aqueous solution of the hydroxypropylmethylcellulose, measured at 30°C using a glass cell with an optical path length of 20 mm, is not less than 95%.

3. The dispersion stabilizer according to claim 1, wherein the viscosity at 20°C of the 2% by mass aqueous solution of the hydroxypropylmethylcellulose is within a range from 10 to 1,000 mPa·s.

4. The dispersion stabilizer according to claim 1, wherein the viscosity at 20°C of the 2% by mass aqueous solution of the hydroxypropylmethylcellulose is within a range from 20 to 500 mPa·s.

5. A method of producing a vinyl chloride-based polymer, comprising a step of conducting a suspension polymerization, within an aqueous medium and in presence of the dispersion stabilizer defined in claim 1, of either vinyl chloride or a monomer mixture of vinyl chloride and another copolymerizable monomer, wherein
at polymerization initiation, a quantity of the dispersion stabilizer is within a range from 0.01 to 0.07 parts by mass per 100 parts by mass of the vinyl chloride or the monomer mixture.

6. The method of producing a vinyl chloride-based polymer according to claim 5, wherein the quantity of the dispersion stabilizer is within a range from 0.01 to 0.05 parts by mass per 100 parts by mass of the vinyl chloride or the monomer mixture.

7. A vinyl chloride-based polymer obtained using the dispersion stabilizer defined in claim 1, wherein a number of foreign objects caused by fibers, as measured in a foreign object measurement test, is not more than 10.

8. The vinyl chloride-based polymer according to claim 7, which is obtained by a method of producing a vinyl chloride-based polymer that comprises a step of conducting a suspension polymerization, within an aqueous medium and in presence of the dispersion stabilizer, of either vinyl chloride or a monomer mixture of vinyl chloride and another copolymerizable monomer, wherein
at polymerization initiation, a quantity of the dispersion stabilizer is within a range from 0.01 to 0.07 parts by mass per 100 parts by mass of the vinyl chloride or the monomer mixture.

9. The vinyl chloride-based polymer according to claim 8, wherein the quantity of the dispersion stabilizer is within a range from 0.01 to 0.05 parts by mass per 100 parts by mass of the vinyl chloride or the monomer mixture.

**European Patent Office**

**EUROPEAN SEARCH REPORT**

Application Number

EP 08 25 0270

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 375 523 A (SHINETSU CHEMICAL CO [JP]) 2 January 2004 (2004-01-02) * examples * ----- | 1-9 | INV. C08F14/06 C08B11/193 C08L1/28 |
| X | EP 1 120 277 A (SHINETSU CHEMICAL CO [JP]) 1 August 2001 (2001-08-01) * example 1 * ----- | 1-9 | |
| A | EP 1 698 642 A (SHINETSU CHEMICAL CO [JP]) 6 September 2006 (2006-09-06) * example 1 * ----- | 1-9 | |
| A | EP 1 734 055 A (SHINETSU CHEMICAL CO [JP]) 20 December 2006 (2006-12-20) * examples * ----- | 1-9 | |
| A | EP 1 065 216 A (SHINETSU CHEMICAL CO [JP]) 3 January 2001 (2001-01-03) * the whole document * ----- | 1-9 | |

TECHNICAL FIELDS SEARCHED (IPC)

C08F

The present search report has been drawn up for all claims

| Place of search | Date of completion of the search | Examiner |
|---|---|---|
| Munich | 30 April 2008 | Baekelmans, Didier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 08 25 0270

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2008

| Patent document cited in search report | | Publication date | Patent family member(s) | | Publication date |
|---|---|---|---|---|---|
| EP 1375523 | A | 02-01-2004 | JP | 2004026861 A | 29-01-2004 |
| | | | US | 2003236398 A1 | 25-12-2003 |
| EP 1120277 | A | 01-08-2001 | DE | 60113165 D1 | 13-10-2005 |
| | | | DE | 60113165 T2 | 08-06-2006 |
| | | | JP | 3763118 B2 | 05-04-2006 |
| | | | JP | 2001205926 A | 31-07-2001 |
| | | | US | 2001011062 A1 | 02-08-2001 |
| EP 1698642 | A | 06-09-2006 | WO | 2005063823 A1 | 14-07-2005 |
| | | | US | 2007100098 A1 | 03-05-2007 |
| EP 1734055 | A | 20-12-2006 | CN | 1880573 A | 20-12-2006 |
| | | | JP | 2006348177 A | 28-12-2006 |
| | | | KR | 20060131668 A | 20-12-2006 |
| | | | US | 2006287518 A1 | 21-12-2006 |
| EP 1065216 | A | 03-01-2001 | CN | 1287195 A | 14-03-2001 |
| | | | CN | 101153472 A | 02-04-2008 |
| | | | DE | 60021963 D1 | 22-09-2005 |
| | | | DE | 60021963 T2 | 24-05-2006 |
| | | | JP | 2001009316 A | 16-01-2001 |
| | | | KR | 20010049638 A | 15-06-2001 |
| | | | TW | 553950 B | 21-09-2003 |
| | | | US | 6884883 B1 | 26-04-2005 |

EPO FORM P0459

For more details about this annex : see Official Journal of the European Patent Office, No. 12/82

**EP 1 950 228 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1524492 A
- US P5204421 A